Europäisches Patentamt

European Patent Office

Office européen des brevets

(19)

(11) **EP 0 850 881 B1**

(12) **EUROPÄISCHE PATENTSCHRIFT**

(45) Veröffentlichungstag und Bekanntmachung des Hinweises auf die Patenterteilung:
**21.08.2002 Patentblatt 2002/34**

(51) Int Cl.$^7$: **C01G 49/02**

(21) Anmeldenummer: **96120935.0**

(22) Anmeldetag: **27.12.1996**

(54) **Verfahren und Vorrichtung zur Herstellung von Eisenoxiden aus salzsauren eisenchloridhaltigen Lösungen**

Process and apparatus for the preparation of iron oxides from solutions containing hydrochloric acid iron oxide chloride

Procédé et dispositif pour la préparation d'oxydes de fer à partir de solutions d'acide chlorychique contenant des chlorures ferriques

(84) Benannte Vertragsstaaten:
**AT BE DE ES FR GB IT NL SE**

(43) Veröffentlichungstag der Anmeldung:
**01.07.1998 Patentblatt 1998/27**

(73) Patentinhaber: **Ruthner, Michael Johann, Dipl.Ing. Dr.mont.**
**4865 Nussdorf am Attersee (AT)**

(72) Erfinder: **Ruthner, Michael Johann, Dipl.Ing. Dr.mont.**
**4865 Nussdorf am Attersee (AT)**

(74) Vertreter: **Nöth, Heinz, Dipl.-Phys.**
**Eisenführ, Speiser & Partner**
**Arnulfstrasse 25**
**80335 München (DE)**

(56) Entgegenhaltungen:
**FR-A- 2 420 509**     **US-A- 5 401 485**

• **DATABASE WPI Section Ch, Week 9314 Derwent Publications Ltd., London, GB; Class L03, AN 93-112617 XP002029973 & JP 05 051 218 A (NIPPON STEEL CORP) , 2.März 1993**
• **DATABASE WPI Section Ch, Week 9436 Derwent Publications Ltd., London, GB; Class L03, AN 94-294186 XP002029974 & WO 94 19283 A (NIPPON STEEL CORP) , 1.September 1994**
• **CHEMICAL ABSTRACTS, vol. 112, no. 12, 19.März 1990 Columbus, Ohio, US; abstract no. 101637z, XP000157542 & JP 01 192 729 A (SUMITOMO METAL INDUSTRIES LTD) 2.August 1989**
• **DATABASE WPI Section Ch, Week 9516 Derwent Publications Ltd., London, GB; Class E31, AN 95-118571 XP002029975 & JP 07 041 320 A (KAWASAKI STEEL CORP) , 10.Februar 1995**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren und eine Vorrichtung zur Herstellung von Eisenoxiden mit geringen Gehalten an Restchloriden aus salzsauren eisenchloridhaltigen Lösungen, bei denen die Lösung in eine von einer Brennkammer direkt beheizten Reaktionsraum gesprüht wird und durch Sprühröstens neben dem regenerierten Eisenoxid auch Salzsäure zurückgewonnen wird.

Bei der Herstellung von sprühgerösteten Eisenoxiden aus salzsauren eisenchloridhaltigen Lösungen, die beispielsweise beim Beizen von Stahl anfallen und in der Regel 800 bis 3000 ppm $Cl^-$ enthalten, ist es nicht möglich, unter Beibehaltung einer spezifischen Oberfläche größer als 3,5 $m^2/g$ auch den Restchloridgehalt am Eisenoxid ohne größeren zeitlichen Behandlungsaufwand auf Werte unter 500 ppm herabzusetzen. Beispielsweise ist es aus "Advances In Ceramics" Vol. 15 (The American Ceramic Society, Inc. Columbus, Ohio, 1986), p. 81-85, im Aufsatz von K. Suganuma et al "Removal of chloride ions from hematite powders for ferrite production" bekannt, daß durch stundenlange Behandlungen mit $H_2O$ und/oder $SO_3$ der Restchloridgehalt herabgesetzt werden kann, wobei jedoch gleichzeitig die spezifische Oberfläche vermindert wird. Außerdem verbleibt ein unerwünschter Gehalt an Schwefel im Eisenoxid. Femer sind aufwendige Nachbehandlungen im Drehrohrofen durch Zusatz von Ammoniak oder mit beheizten Schnekkenförderern mit Wasserdampfbeaufschlagung bekannt.

Großtechnisch wird das Problem ferner durch eine Reihe von Verfahrensschritten wie Auswaschen mit hochreinem Wasser, Sprühtrocknung und anschließendem Aufmahlen gelöst. Diese zusätzlichen Verfahrensschritte sind äußerst aufwendig und kostenintensiv.

Femer ist aus der WO 96/32355 ein Verfahren zur Reduktion von Restchloridgehalten in regenerierten Eisenoxiden, welche durch die thermische Zersetzung von salzsauren Abbeizen hergestellt wurden, bekannt. Dieses Verfahren sieht im wesentlichen die nachträgliche Beimengung von diversen Metallhydroxiden sowie eine längere nachträgliche thermische Behandlung zur Herabsetzung des Restchloridgehaltes vor, wobei auf die damit verbundene Reduktion der spezifischen Oberfläche kein Bezug genommen wird.

Die TDK Electronics Co. beschreibt in der japanischen Patentanmeldung 47-39477 ein Verfahren zur Umwandlung von beta-FeOOH, welches 2,5% Chloride enthält, in alpha-$Fe_2O_3$ bei 450°C. Es wird aber kein Bezug auf eine mögliche Restchloridentfernung genommen.

Ein wesentlicher Nachteil der industriellen Verarbeitung von synthetischen, regenerierten Eisenoxiden besteht im gefürchteten Korrosionsverhalten geringster Restchloridanteile, gegenüber Konstruktionsmaterialien über einen weiten Temperaturbereich. Darüberhinaus führen geringe Restchloridgehalte zur Beeinträchtigung der magnetischen und mechanischen Eigenschaften bei Ferritwerkstoffen, welche regenerierte synthetische Eisenoxide als Rohstoff einsetzen.

Aufgabe der Erfindung ist es daher, ein Verfahren und eine Vorrichtung der eingangs genannten Art zu schaffen, bei denen unter Beibehaltung einer großen spezifischen Oberfläche (größer als 3,5 $m^2/g$) der Restchloridgehalt des Eisenoxidgranulats kurzzeitig und mit geringem Aufwand auf Werte unter 500 ppm abgesenkt wird.

Diese Aufgabe wird erfindungsgemäß beim Verfahren durch die Merkmale des Patentanspruches 1 und bei der Vorrichtung durch die Merkmale des Patentanspruches 7 gelöst.

Bei dem Verfahren und der Vorrichtung zur Herstellung von Eisenoxiden durch Sprühröstens wird die eisenchloridhaltige Lösung von oben in einen Sprühröster eingebracht und durch Sprühdüsen in einen Reaktionsraum, welcher von einer direkten Brennereinrichtung erhitzt wird, eingebracht. Die Temperatur des über der Brennerebene angeordneten Reaktionsraumes, in welchem Brenngase zyklonartig im Gegenstrom zur versprühten Lösung aufsteigen, liegt beim Abgas bei etwa 400°C und in der Brennerebene bei etwa 750°C insbesondere bei ca. 650°C (gemessen 1 m über der Brennerebene). In dieser Reaktionszone erfolgt die thermische Zersetzung der Eisenchloridlösung nach folgender Reaktionsgleichung:

$$2 FeCl_2 + 2 H_2O + \tfrac{1}{2} O_2 \rightarrow Fe_2O_3 + 4 HCl$$

Das Eisenoxid ($Fe_2O_3$) fällt aus der Reaktionszone des Rösters nach unten und wird über ein Schleusensystem bei Temperaturen um 450°C bis 580°C ausgetragen.

Gemäß der Erfindung ist zwischen der Brennerebene und dem Granulataustrag eine Kühlzone eingeschaltet, in welcher insbesondere durch direkte Beaufschlagung von außen z.B. Einbringen von kühlenden Gasen mit einer Temperatur vorzugsweise zwischen -40°C und +40°C das Eisenoxidgranulat auf eine Temperatur unter 450°C bevorzugt auf etwa 350°C bis 420°C abgekühlt wird. Gleichzeitig wird der Volumenanteil an Salzsäuregas im Sprühröster in diesem Bereich, 0,5 m über der Austragseinrichtung gemessen, unter 10 Vol.-% insbesondere unter 5 Vol.-% oder unter 2 Vol.-% abgesenkt.

Nach dem Austrag des Eisenoxidgranulats aus dem Spühröster wird es in einer Hitze auf ein auf Temperatur gehaltenes und mit Heißdampf beaufschlagtes Schüttbett in einer Schütthöhe unter 10 mm vorzugsweise zwischen 2 mm und 5 mm aufgebracht. Das Schüttbett kann direkt oder indirekt beheizt oder auch gekühlt werden. Die Schüttgutführung der Eisenoxidgranulate kann in Gleichstrom oder Gegenstrom zum Heißdampf erfolgen. Die Einwirkungszeit des Heißdampfes kann unterhalb von 5 min, vorzugsweise unterhalb von 2 min bemessen und insbesondere weniger als 1 min sein. Das daraus resultierende Eisenoxidgranulat hat bei einer spezifischen Oberfläche (BET) größer 3,5 $m^2$/g und insbesondere größer als 4,5 $m^2$/g einen Restchloridgehalt unter 500 ppm, insbesondere unter 100 ppm und 50 ppm.

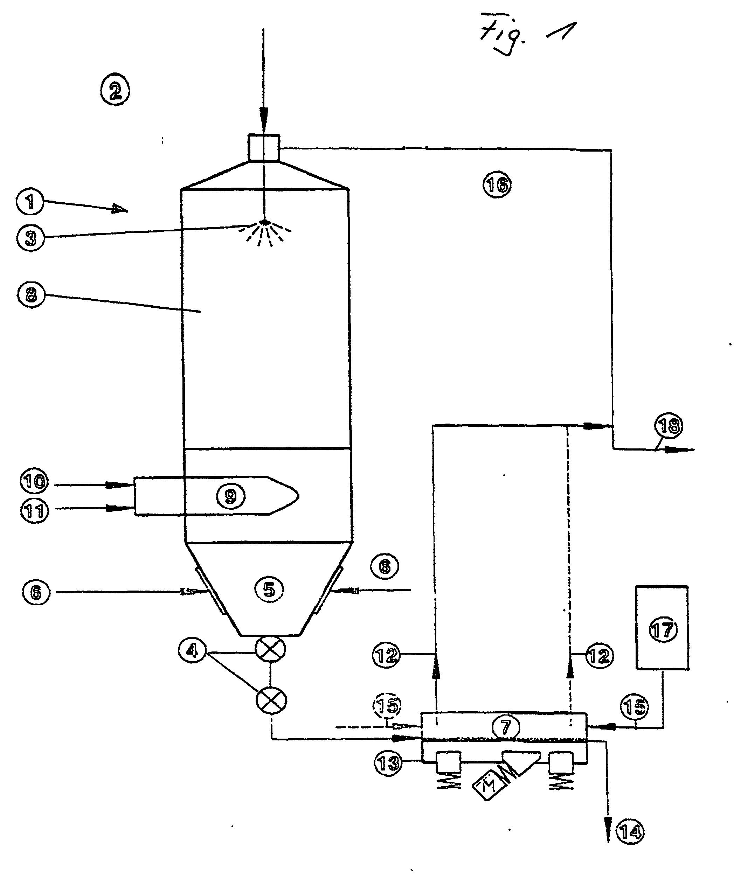

Anhand der Figur und der nachfolgenden Tabelle werden Ausführungsbeispiele der Erfindung noch näher erläutert.

Bei einem Ausführungsbeispiel wird in bekannter Weise eine wässrige salzsaure Eisenchloridlösung mit insbesondere HCl- und Fe-Anteilen von etwa 195 g HCl/l und 120 g Fell über eine Aufgabeeinrichtung 2 von oben in einen Sprühröster 1 eingegeben. Die Eisenchloridlösung wird durch eine Sprüheinrichtung 3 in einen erhitzten Reaktionsraum 8, in welchem Brenngase im Gegenstrom in Heißzyklonen aufsteigen und im Bereich der Brennerebene auf ca. 650°C erhitzt ist, eingebracht.

In der Brennerebene befindet sich eine Brennkammer 9 mit einem oder mehreren Brennern und Zuleitungen 10 für einen Brennstoff und 11 für Verbrennungsluft. Über die Brennkammer 9 werden tangential die aus dem Brennstoff und der Luft gewonnenen Brenngase in den Sprühröster eingebracht. Die Brenngase steigen zyklonartig im Gegenstrom zur eingebrachten und versprühten Lösung auf.

In dem Reaktionsraum 8 erfolgt die thermische Zersetzung der salzsauren Eisenchloridlösung in Eisenoxidgranulat, HCl-Gas und Brüden. Die HCl-haltigen Gase werden mit den Abgasen über einen Gasauslaß im oberen Teil des Sprührösters 1 ausgetragen. Der Volumenanteil am Salzsäuregas beträgt in diesem Raum etwa 10 bis 12,5 Vol%.

Abweichend vom Stand der Technik wird bei der Erfindung unterhalb der Brennerebene eine Kühlzone 5 durch Einleitung von kühlenden Gasen über eine Kühlgaszuführung 6 geschaffen. Durch das Einbringen der kühlenden Gase unterhalb der Brennerebene wird der Volumenanteil an Salzsäuregas unter 10 Vol% insbesondere unter 2 Vol% im Sprühröster abgesenkt. Gleichzeitig erfolgt eine Abkühlung der sprühgerösteten Eisenoxidgranulate auf Temperaturen unter 450°C insbesondere zwischen 300°C und 400°C. Dies bewirkt eine rasche Abkühlung der Eisenoxidgranulate auf Temperaturen, welche eine Kollapierung der Primärteilchen hintanhält.

Am unteren Ende des Sprührösters 1 befindet sich eine Austragseinrichtung 4 für das Eisenoxidgranulat, welche mit einem Schleusensystem, z.B. Zellenradschleuse in herkömmlicher Weise ausgestattet sein kann. Das ausgetragene Eisenoxidgranulat wird in einer Hitze auf ein z.B. durch indirekte Beheizung auf Temperatur gehaltenes und mit Heißdampf beaufschlagtes Schüttbett 7 aufgebracht. Das Schüttbett 7 kann als Vibrationsförderbett mit einer Fördereinrichtung 13 ausgebildet sein, wobei die Förderrichtung durch einen Pfeil am Eisenoxidgranulataustritt 14 in der Figur bezeichnet ist. Im Gleichstrom oder Gegenstrom zur Förderrichtung des Schüttbettes 7 wird über das in einer Schütthöhe unter 20 mm, vorzugsweise unter 10 mm, aufgebrachte heißen Oxidgranulat Heißdampf 15 aus einer Heißdampfaufbereitung 17 geleitet. Die Einwirkungszeit des Heißdampfes, insbesondere Sattdampfes liegt unterhalb von 5 min vorzugsweise unterhalb von 1 min. Über dem Schüttbett 7 ist hierzu eine geeignete Heißdampfführungseinrichtung z.B. in Form einer Blechabdeckung vorgesehen. Abgase werden in den Sprühröster 1 zurückgeführt oder vorzugsweise der zentralen Brüdenableitung 18 über einen Gasauslaß 12, der je nach Gleichstrom oder Gegenstrom des Heißdampfes 15 am Ende oder Anfang der Blechabdeckung liegt, zugeleitet.

Bei einem speziellen Ausführungsbeispiel der Erfindung wurde etwa auf halber Höhe zwischen Brennerebene und Austragseinrichtung im konisch verlaufenden Teil des Sprührösters zur Bildung der Kühlzone 5 von außen Außenluft mit einer Temperatur von 20°C eingebracht. Die Luftzufuhr erfolgte über Siebböden, wobei das sprühgeröstete Eisenoxid auf eine Temperatur von 375°C abgekühlt wurde. Der Volumenanteil am HCl-Gas vor der Austragseinrichtung wurde mit 1,8 Vol% gemessen. Der Restchloridgehalt der Eisenoxidgranulate nach dem Austrag wurde mit 760 ppm gemessen. In einer Hitze wurde das Granulat auf das indirekt beheizte Schüttbett, welches als Vibrationsförderbett ausgebildet war, aufgegeben. Bei einer Verweilzeit von 15 Sekunden wurde das Eisenoxidgranulat mit einer gleichmäßigen Schütthöhe von 3,5 mm mit Sattdampf im Gegenstrom bei einer Temperatur von ca. 250°C bis 420°C, insbesondere 380°C beaufschlagt. Nach Abkühlen des Eisenoxidgranulats ergab sich ein Restchloridgehalt von 82 ppm bei einer spezifischen Oberfläche von 5,2 $m^2$/g. Das Muster 1 in der folgenden Tabelle zeigt dies. Beim Muster 2 lag die Temperatur des abgekühlten Eisenoxids bei 325°C, wodurch eine weitere Reduzierung des Restchloridgehalts bei vergrößerter spezifischer Oberfläche erreicht wurde.

Tabelle

| N° | Eisenoxid-herkunft Erzeuger | Temperatur Austrag (4) °C | Eisenoxide - Restchloridgehalte & spezifische Oberfläche | | | |
|---|---|---|---|---|---|---|
| | | | am Austrag (4) | | Silo bzw. Austrag (14) | |
| | | | ppm Cl | $m^2/g$ | ppm Cl | $m^2/g$ |
| 1 | Stahlwerk | 485 | 1200 | 3.5 | 1350 | 3.4 |
| 2 | Stahlwerk | 452 | 1600 | 4.5 | 1750 | 4.4 |
| 3 | Muster 1 | 375 | 760 | 5.1 | 82 | 5.2 |
| 4 | Muster 2 | 325 | 485 | 5.8 | 45 | 5.9 |

Bezugszeichenliste:

1 Sprühröster
2 Aufgabeeinrichtung
3 Sprüheinrichtung
4 Austrageeinrichtung
5 Kühlzone
6 Kühlgaszuführung
7 Schüttbett
8 Reaktionsraum
9 Brennkammer
10 Brenngaszufuhr
11 Luftzufuhr
12 Gasauslaß
13 Fördereinrichtung
14 Eisenoxidgranulataustritt
15 Heißdampf
16 Abgasleitung
17 Heißdampfaufbereitung
18 Zentrale Brüdenableitung der Sprühröstanlage

**Patentansprüche**

1.  Verfahren zur Herstellung von Eisenoxiden aus salzsauren eisenchloridhaltigen Lösungen, bei dem die Lösung in einen von einer Brennkammer direkt beheizten Reaktionsraum oberhalb der Brennerebene gesprüht wird und im Gegenstrom zu den Brenngasen durch Sprührösten neben dem regenerierten Eisenoxid auch Salzsäure zurückgewonnen wird,
    **dadurch gekennzeichnet,**
    **dass** unterhalb der Brennerebene das sprühgeröstete Eisenoxidgranulat auf eine Temperatur unter 450°C durch Einbringen von Kühlgas abgekühlt und ausgetragen wird und dass das ausgetragene Eisenoxidgranulat in einer Hitze auf ein Schüttbett mit einer Schütthöhe unter 20 mm, vorzugsweise unter 10 mm aufgebracht wird und mit heißem Dampf, insbesondere Sattdampf, beaufschlagt wird.

2.  Verfahren nach Anspruch 1, **dadurch gekennzeichnet, daß** in der Kühlzone zwischen der Brennerebene und dem Granulataustrag der Volumenanteil an Salzsäuregas unter 10 Vol.-%, vorzugsweise unter 5 Vol.-% oder unter 2 Vol.-% abgesenkt wird.

3.  Verfahren nach Anspruch 1 oder 2, **dadurch gekennzeichnet, daß** das sprühgeröstete Eisenoxidgranulat im Sprühröstreaktor auf eine Temperatur auf etwa 350°C bis 420°C abgekühlt wird.

4.  Verfahren nach einem der Ansprüche 1 bis 3, **dadurch gekennzeichnet, daß** als Kühlgas Luft eingebracht wird.

5. Verfahren nach Anspruch 1, **dadurch gekennzeichnet, dass** die Dampfbehandlung bei einer Temperatur von ca. 250°C bis 420°C durchgeführt wird.

6. Verfahren nach Anspruch 5 oder 6, **dadurch gekennzeichnet, dass** die Dampfbehandlung etwa 5 min oder weniger, vorzugsweise unter 1 min dauert.

7. Vorrichtung zur Herstellung von Eisenoxiden durch Sprührösten einer salzsauren eisenchloridhaltigen Lösung in einem Sprühröster mit einer Sprüheinrichtung zum Versprühen der aufgegebenen Eisenchloridlösung in einen von einer Brennereinrichtung erhitzten Reaktionsraum, in welchem im Gegenstrom zu den Brenngasen die Lösung in Eisenoxidgranulat, HCl-Gas und Brüden chemisch zersetzt wird, wobei die Sprüheinrichtung oberhalb der Brennereinrichtung angeordnet ist, einem Auslaß für die das HCl-Gas enthaltenden Brüden und einer Austragseinrichtung für das Eisenoxidgranulat,
**dadurch gekennzeichnet,**
**dass** zwischen der Brennerebene und der Austragseinrichtung (4) eine Kühlzone (5) für das sprühgeröstete Eisenoxidgranulat angeordnet ist und dass ferner ein Schüttbett (7) für das ausgetragene sprühgeröstete Eisenoxidgranulat, über welches ein heißer Dampfstrom insbesondere Sattdampf, geleitet ist, in Kombination mit dem Sprühröster (1) vorhanden ist.

8. Vorrichtung nach Anspruch 7, **dadurch gekennzeichnet, dass** in der Kühlzone (5) eine von außen in das Rösterinnere gerichtete Kühlgaszufuhr (6) vorhanden ist.

**Claims**

1. A process for the production of iron oxides from a free hydrochloric acid containing iron chloride solution, charging said solution above the focal plane by means of a spray roasting in a counter - current way into directly heated reaction chamber fired by a burner chamber yielding regenerated iron oxide and hydrochloric acid, comprising cooling and feeding said spray roasted iron oxide granules beneath the focal plane to a temperature below 450 °C by means of introducing a cooling gas and charging the discharged iron oxide granules in one heat onto a conveyor plate at a height under 20 mm preferably under 10 mm and treating said iron oxide with hot steam, particularly saturated steam.

2. A process according to claim 1, further comprising reducing the hydrochloric acid gas concentration within the cooling zone between the focal plane and the granule discharge under 10 volume percent preferably under 5 volume percent or less than 2 volume percent.

3. A process according to claim 1 or 2, wherein the spray roasted iron oxide granules are cooled within the spray roaster reactor to a temperature of ca. 350°C to 420°C.

4. A process according to claims 1 till 3, wherein the cooling gas is air.

5. A process according to claim 1, wherein the steam treatment is carried out at a temperature between 250 °C and 420 °C.

6. A process according to claim 5 or 6, wherein the steam treatment takes 5 minutes or less, preferably less than 1 minute.

7. Installation for the production of iron oxides by means of spray roasting an iron chloride solution within a spray roaster incorporating a spraying device for spraying said feed solution into a burner heated reaction chamber, chemically decomposing in a counter - current flow in respect to the reaction gases, said solution into iron oxide granules, HCl gas and reaction gases, the spraying device being located above the burner chamber, an exit tube for the reaction gas and a discharge device or the iron oxide granules, wherein between the focal plane and the discharge device (4) exists a cooling zone (5) for spray roasted ferric oxide granules and furthermore a conveyor plate (7) for the treatment of discharged iron oxide granules with steam, particularly saturated steam in combination with a spray roaster (1).

8. Installation according to claim 7, wherein the cooling zone (5) is equipped with a cooling gas duct, which is directed from outside towards the inner of the roaster.

**Revendications**

1. Procédé d'obtention d'oxyde de fer à partir de un acide chlorhydrique solution aqueuse de chlorure de fer au cours duquel la solution est injectée par pulvérisation à contre - courant dans une chambre à reaction directement chauffée par une chambre à combustion, outre l'oxyde de fer grillé ou récupère également l'acide chlorhydrique, **caractérisé par le fait qu'**à la base de la chambre de combustion le granulat d'oxyde de fer et refroidi á moins de 450°C par un gaz refroidissant il transféré, et que l'extraction du granulat d'oxyde de fer est conduit sur lit avec une hauteur de chute de 20 mm ou mieux de 10 mm sous projection de vapeur d'eau en particulier vapeur d'eau à saturation.

2. Procédé selon revendication 1, **caractérisé par** une teneur de 10% ou mieux 5 et même 2% de gaz chlorés dans la zone de refroidissement entre la surface de chauffre et la sortie du granulat.

3. Procédé selon revendication 1 ou 2, **caractérisé par** une température de granulat d'oxide de fer qui est refroidi à moins de 350°C à 420°C.

4. Procédé selon revendication 1 a 3, **caractérisé par** l'utilisation d'aire comme gaz refroidissant.

5. Procédé selon revendication 1, **caractérisé par** le traitement à une vapeur d' eau chauffée de 250°C à 420°C.

6. Procédé selon revendication 5 ou 6, **caractérisé par** le traitement à la vapeur d'eau chaude pendant 5 minutes ou moins et au mieux, moins de 1 minute.

7. Dispositif pour la production d'oxydes de fer par pulvérisation d'une acid hydrochlorique solution aqueuse de chlorure de fer dans une réacteur doté d'un pulvérisateur permettant dans le réacteur chauffant pour la dispersion de la solution dans une chambre à réaction directement chauffée par une chambre à combustion dan laquelle les gaz sont introduits par tourbillons à contre - courant de la solution injecté pour la dissociation chimique du chlorure pour obtenir un oxyde de fer, avec l'evacation des gaz chlorés, d' échappement gazeuse et de l'oxyde de fer. Les gaz contenant du HCl sont évacués par la sortie des gaz de combustion dans la partie supérieure du réacteur (1), **caractérisé par** une zone de refroidissement (5) de l'oxyde de fer grille, située entre la zone de grillage et le dispositif d'extraction (4) et par un lit (7) pour l'extraction du granulat d'oxyde de fer sur lequel est projeté un flux de vapeur d'eau en particulier vapeur d'eau à saturation en combinaison avec le réacteur (1).

8. Un dispositif selon la revendication 7, **caractérisé par** une entrée extérieure de gaz refroidissant (6) dans la interieure de zone de refroidissement (5)

Fig. 1